# EUROPÄISCHE PATENTSCHRIFT

(11) **EP 1 183 161 B1**
(45) Veröffentlichungstag und Bekanntmachung des Hinweises auf die Patenterteilung: **15.12.2010**
(21) Anmeldenummer: 01933688.2
(22) Anmeldetag: 13.03.2001
(51) Int. Cl.: B60H 1/22

(54) **HEIZSYSTEM ZUM BEHEIZEN DES INNENRAUMS EINES KRAFTFAHRZEUGS**
HEATING SYSTEM FOR HEATING THE PASSENGER COMPARTMENT OF A MOTOR VEHICLE
SYSTEME DE CHAUFFAGE PERMETTANT DE CHAUFFER L'INTERIEUR D'UNE AUTOMOBILE

(30) Priorität: 22.03.2000 DE 10014021
(43) Veröffentlichungstag der Anmeldung: 06.03.2002
(73) Patentinhaber: Webasto AG, 82131 Stockdorf (DE)
(72) Erfinder: STEMMLER, Martin, 86929 Penzing (DE); LANZL, Ingrid, 80333 München (DE)
(74) Vertreter: Kuhar, Silvester
(86) Internationale Anmeldenummer: PCT/EP2001/002773
(87) Internationale Veröffentlichungsnummer: WO 2001/070530

(56) Entgegenhaltungen:
- DE-A- 19 538 763
- DE-A- 19 800 756
- US-A- 5 299 631
- US-A- 5 490 572
- PATENT ABSTRACTS OF JAPAN vol. 1995, no. 11, 26. Dezember 1995 (1995-12-26) & JP 07 223429 A (MATSUSHITA ELECTRIC IND CO LTD), 22. August 1995 (1995-08-22)
- PATENT ABSTRACTS OF JAPAN vol. 1995, no. 07, 31. August 1995 (1995-08-31) & JP 07 089334 A (MATSUSHITA ELECTRIC IND CO LTD), 4. April 1995 (1995-04-04)

## Beschreibung

Die vorliegende Erfindung betrifft ein System zum Beheizen des Innenraums eines Kraftfahrzeugs gemäß dem Oberbegriff von Anspruch 1.

Um ein Heizen eines Kraftfahrzeuginnenraums unabhängig vom Fahrzeugmotor zu erzielen, werden üblicherweise Verbrennungsheizgeräte mit dem gewöhnlichen Heizsystem kombiniert, welches auf dem Wärmeaustausch mit dem Kühlwasserkreislauf des Fahrzeugmotors basiert. Das Verbrennungsheizgerät kann dabei Treibstoff aus dem Fahrzeugtank verbrennen, um entweder direkt Luft zu erwärmen, welche in den Fahrzeuginnenraum eingeleitet wird, oder Kühlwasser im Kühlwasserkreislauf zu erwärmen, das dann über einen oder mehrere Wärmetauscher dem Fahrzeuginnenraum Wärme zuführt. Die DE 197 40 062 A1 zeigt ein Heizsystem gemäß Oberbegriff des Anspruchs 1.

Aus der DE 199 02 050 A1 ist ein Wärmetauscher bekannt, der mit einer elektrischen Heizvorrichtung ausgestattet ist. Ein Heizen mittels einer elektrischen Heizvorrichtung ist insbesondere bei abgeschaltetem Fahrzeugmotor nur für eine sehr kurze Zeit möglich, da andernfalls die Fahrzeugbatterie zu stark beansprucht wird und ein erneuter Start des Fahrzeugmotors gefährdet wäre.

Aus der nach dem Prioritätstag der Anmeldung veröffentlichten DE 198 57 240 A1 ist ein Heizgerät bekannt, das sowohl mit Flüssigbrennstoff betreibbar ist, als auch mit einem elektrischen Heizelement in Form einer Heizspirale, die in einen Wärmetauscher des Heizgeräts integrierbar ist. Die Heizspirale muss in aufwendiger Weise bereits bei der Montage in das Fahrzeugheizgerät bzw. in dessen Wärmetauscher eingesetzt und kontaktiert werden. Da im Bereich der Heizspiralen ein flüssiger Wärmeträger umgewälzt wird müssen sowohl die Heizspirale als auch deren Kontakte mit einer wasserdichten Isolierung versehen sein. Dadurch erhöhen sich die Kosten eines derartigen kombinierten Helzgerätes erheblich.

Aus der DE 199 02 050 A1 ist eine Heizungs- oder Klimaanlage für Fahrzeuge bekannt, bei der eine Zusatzheizung innerhalb eines Flüssigkeitswärmetauschers angeordnet ist, die mehrere den Flüssigkeitswärmetauscher durchdringende Heizstäbe umfasst, in denen PTC-Elemente angeordnet sind. Zur Vermeidung von elektrischen Kurzschlüsse sind die Heizstäbe durch zusätzliche Isolationsplatten gegenüber den Wasserkanälen isoliert.

Es ist Aufgabe der vorliegenden Erfindung, ein Kraftfahrzeugheizsystem mit einem Verbrennungsheizgerät zu schaffen, welches möglichst flexibel betrieben werden kann und dennoch eine einfache Montage, geringe Kosten, einen guten Wirkungsgrad sowie einen geringen Bauraumbedarf aufweist.

Diese Aufgabe wird erfindungsgemäß gelöst durch ein Heizsystem, wie es in Anspruch 1 definiert ist. Durch die Integration einer elektrischen Heizvorrichtung in das Verbrennungsheizgerät kann dieses wesentlich flexibler und mit höherer Heizleistung betrieben werden, ohne dass der Bauraumbedarf, die Montageanforderungen und die Kosten wesentlich erhöht werden.

Bevorzugte Ausgestaltungen der Erfindung sind in den Unteransprüchen angegeben.

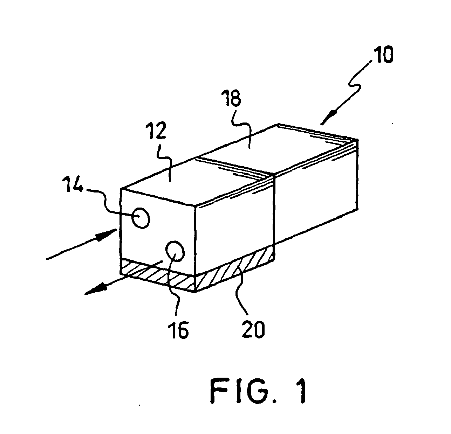

Im Folgenden wird die Erfindung anhand der beigefügten Zeichnung, welche schematisch eine Ausführungsform der Erfindung zeigt, beispielhaft näher erläutert.

In der einzigen Figur ist schematisch ein Verbrennungsheizgerät 10 dargestellt, welches mit Treibstoff aus dem Treibstofftank des Fahrzeugs gespeist wird, um Verbrennungswärme zu erzeugen, welche zum Erwärmen von Kühlmittel aus dem Kühlmittelkreislauf des Kraftfahrzeugmotors verwendet wird. Das Verbrennungsheizgerät 10 umfasst als Wärmetauscher einen Block 12 zum Zuleiten und Ableiten von Kühlflüssigkeit im Gegenstrom mittels eines Zuleitungskanals 14 und eines Ableitungskanals 16. Der Wärmetauscher-Block 12 besteht aus thermisch gut leitendem Material und steht in direktem thermischen Kontakt mit einem Verbrennungsabschnitt 18 des Verbrennungsheizgeräts 10. An der Unterseite des Wärmetauscher-Blocks 12 ist ein PTC (Positive Temperatur Coefficient)-Heizelement 20 in direktem thermischen Kontakt mit dem Wärmetauscher-Block 12 vorgesehen, um diesen bei Bedarf zu erwärmen und dadurch die durch den Wärmetauscher-Block 12 strömende Kühlflüssigkeit unabhängig von dem Verbrennungsabschnitt 18 zu erwärmen. Zu diesem Zweck wird das PTC-Heizelement aus dem Bordnetz mit elektrischer Energie versorgt, wobei die Beschaltung zweckmäßigerweise so gewählt ist, dass das PTC-Element 20 nur dann elektrische Energie entnehmen kann, wenn der Generator genügend Leistung erzeugt, um ein Entladen der Fahrzeugbatterie zu verhindern.

Diese Integration eines PTC-Heizelements 20 in ein Verbrennungsheizgerät 10 vorzugsweise an oder in einer Wand des Wärmetauscher-Blocks 12 hat den Vorteil, dass ohne wesentlichen zusätzlichen Montageaufwand und Bauraumbedarf ein flexibleres motorunabhängiges Beheizen der Kühlflüssigkeit des Motors möglich ist, als dies bei einem herkömmlichen Verbrennungsheizgerät der Fall ist. So ist einerseits ein Heizen der Kühlflüssigkeit auch bei ausgeschaltetem Verbrennungsabschnitt 18 möglich, indem das PTC-Heizelement 20 mit elektrischer Leistung beaufschlagt wird, während andererseits bei in Betrieb befindlichem Verbrennungsabschnitt 18 insgesamt eine größere Heizleistung zur Verfügung steht und somit ein schnelleres Erwärmen der Kühlflüssigkeit möglich ist, als dies ohne zusätzliches elektrisches Heizelement 20 der Fall wäre.

Bei der Integration in einer Wand des Verbrennungsheizgeräts 10 oder des Wärmetauscher-Blocks 12 kann das Heizelement 20 in Form von unmittelbar bei der Herstellung - beispielsweise bei einem Gießen des Gehäuses - als Widerstandsdrähte oder Platten mit in die entsprechende Wand eingebettet werden. Dadurch wird eine einfachste Herstellung möglich. Die elektrischen Heizelemente sind vor Beschädigung bestens geschützt. Eine Verkalkung ist ausgeschlossen, da kein Kontakt zum flüssigen Wärmeträger besteht, wie bei der eingangs genannten DE 198 57 240 A1 Es ist ein hervorragender Wärmeübergang von den Heizelementen 20 auf die jeweilige Wand gewährleistet.

Bei einer Anordnung von außen an einer Wand des Verbrennungsheizgeräts 10 oder des Wärmetauscher-Blocks 12 ist das elektrische Heizelement 20 vorteilhaft zusätzlich nach außen von einer wärmeisolierenden Schicht oder Folie abgedeckt, um keine großen Abstrahlungsverluste nach außen in Kauf nehmen zu müssen.

## Patentansprüche

1. Heizsystem zum Beheizen des Innenraums eines Kraftfahrzeugs, mit einem Verbrennungsheizgerät (10) zum Verbrennen von Kraftstoff in einem Wärmetauscher, um als flüssiger Wärmeträger dienende Flüssigkeit zu erwärmen,
**dadurch gekennzeichnet,**
**dass** eine elektrische Heizvorrichtung (20) ohne Kontakt zum flüssigen Wärmeträger an einer Wand des Verbrennungsheizgeräts (10) angeordnet oder in eine solche Wand integriert ist, um der zu erwärmenden Flüssigkeit Wärme zuzuführen.

2. Heizsystem nach Anspruch 1, **dadurch gekennzeichnet, dass** das Verbrennungsheizgerät (10) einen Wärmetauscher-Block (12) zum Zuleiten und Ableiten von Flüssigkeit im Gegenstrom umfasst, wobei die Heizvorrichtung (20) in direktem Wärmekontakt mit dem Wärmetauscher-Block (12) steht, um diesen zu erwärmen.

3. Heizsystem noch Anspruch 2, **dadurch gekennzeichnet, dass** die Heizvorrichtung (20) an der Außenseite des Wärmetauscher-Blocks (12) angeordnet ist.

4. Heizsystem nach Anspruch 2, **dadurch gekennzeichnet, dass** die Heizvorrichtung (20) in eine Wand des Wärmetauscher-Blocks (12) integriert ist.

5. Heizsystem nach einem der vorhergehenden Ansprüche, **dadurch gekennzeichnet, dass** es sich bei der Heizvorrichtung (20) um eines oder mehrere PTC-Heizelemente handelt.

6. Heizsystem nach einem der vorhergehenden Ansprüche, **dadurch gekennzeichnet, dass** die Heizvorrichtung (20) aus dem Bordnetz des Fahrzeugs gespeist werden kann.

## Claims

1. Heating system for heating the interior of a motor vehicle, with a combustion heater (10) for the combustion of fuel in a heat exchanger, in order to heat liquid which serves as a liquid heat transfer medium, **characterized in that** an electric heating device (20) is arranged, without contact with the liquid heat transfer medium, on a wall of the combustion heater (10) or is integrated into such a wall, in order to supply heat to the liquid to be heated.

2. Heating system according to Claim 1, **characterized in that** the combustion heater (10) comprises a heat exchanger block (12) for the delivery and discharge of liquid in countercurrent, the heating device (20) being in direct thermal contact with the heat exchanger block (12) in order to heat the latter.

3. Heating system according to Claim 2, **characterized in that** the heating device (20) is arranged on the outside of the heat exchanger block (12).

4. Heating system according to Claim 2, **characterized in that** the heating device (20) is integrated into a wall of the heat exchanger block (12).

5. Heating system according to one of the preceding claims, **characterized in that** the heating device (20) comprises one or more PTC heating elements.

6. Heating system according to one of the preceding claims, **characterized in that** the heating device (20) can be fed from the on-board power supply of the vehicle.

## Revendications

1. Système de chauffage permettant de chauffer l'intérieur d'un véhicule automobile, avec un appareil de chauffage à combustion (10) pour brûler du carburant dans un échangeur de chaleur, pour chauffer un liquide servant de porteur de chaleur liquide, **caractérisé en ce qu'**un dispositif de chauffage électrique (20) est disposé sur une paroi de l'appareil de chauffage à combustion (10) sans contact avec le porteur de chaleur liquide ou est intégré dans une telle paroi, afin de fournir de la chaleur au liquide à chauffer.

2. Système de chauffage selon la revendication 1, **caractérisé en ce que** l'appareil de chauffage à combustion (10) comprend un bloc d'échangeur de chaleur (12) pour amener et évacuer du liquide à contre-courant, dans lequel le dispositif de chauffage (20) est en contact thermique direct avec le bloc échangeur de chaleur (12), afin de chauffer celui-ci.

3. Système de chauffage selon la revendication 2, **caractérisé en ce que** le dispositif de chauffage (20) est disposé sur le côté extérieur du bloc échangeur de chaleur (12).

4. Système de chauffage selon la revendication 2, **caractérisé en ce que** le dispositif de chauffage (20) est intégré dans une paroi du bloc échangeur de chaleur (12).

5. Système de chauffage selon l'une quelconque des revendications précédentes, 1 **caractérisé en ce que** le dispositif de chauffage (20) est constitué par un ou plusieurs éléments de chauffage PTC.

6. Système de chauffage selon l'une quelconque des revendications précédentes, **caractérisé en ce que** le dispositif de chauffage (20) peut être alimenté à partir du réseau de bord du véhicule.
